**Europäisches Patentamt**

**European Patent Office**

**Office européen des brevets**

(19)

(11) Veröffentlichungsnummer: **0 034 545**

**A2**

(12) # EUROPÄISCHE PATENTANMELDUNG

(21) Anmeldenummer: **81400254.9**

(22) Anmeldetag: **18.02.81**

(51) Int. Cl.³: **E 04 B 1/49**
**E 04 B 1/41, E 04 B 2/86**

(30) Priorität: **18.02.80 FR 8003463**

(43) Veröffentlichungstag der Anmeldung:
**26.08.81 Patentblatt 81/34**

(84) Benannte Vertragsstaaten:
**BE DE IT LU NL**

(71) Anmelder: **Industries et Techniques du Bâtiment**
**16, rue de la Tour d'Auvergne**
**F-75009 Paris(FR)**

(72) Erfinder: **Paul, Dominique**
**24, rue de Béarn**
**F-92210 St.Cloud(FR)**

(74) Vertreter: **Boissel, Jean-François**
**ACNO 68, rue de Paris**
**F-93804 - Epinay Cedex(FR)**

(54) **Verbindungsvorrichtung für Verkleidungsplatten während des Baus von Betonwänden und Handwerkszeug für die Verwendung dieser Vorrichtung.**

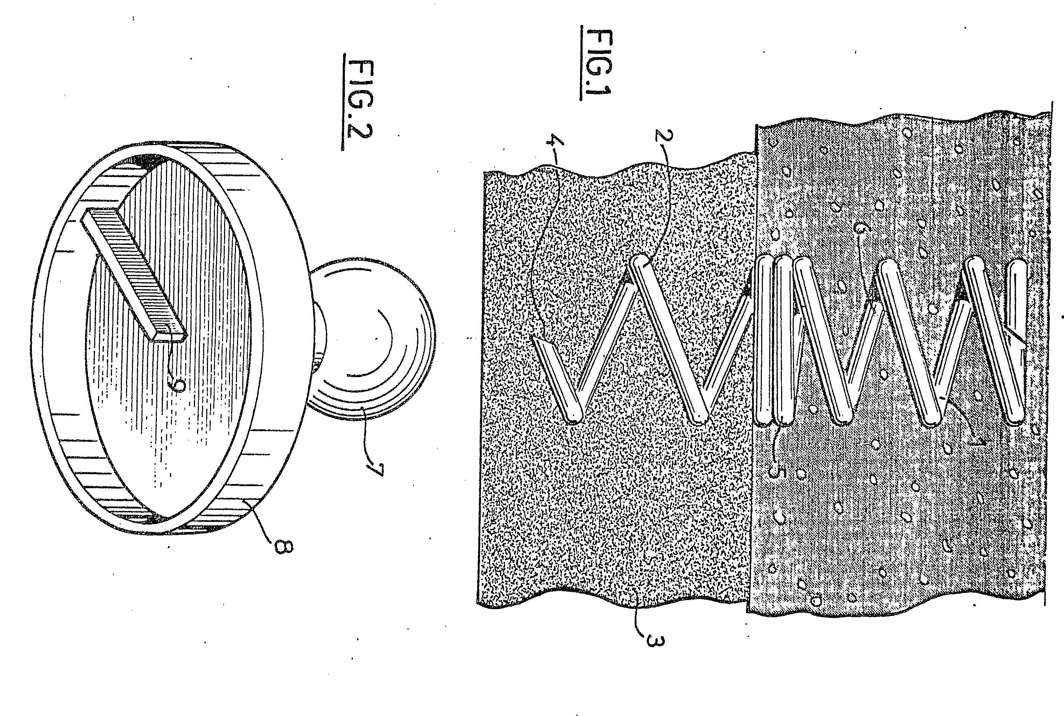

(57) L'invention concerne un dispositif de fixation de panneaux de parement lors de la réalisation de parois en béton caractérisé en ce qu'il est constitué d'un ressort hélicoîdal de diamètre constant comportant trois parties :
a) une partie de vissage à pas large et constant
b) une partie médiane à spires jointives
c) une partie à pas intermédiaire terminée par une spire plate à extrêmité biseautée.
Dispositif applicable à la fixation de panneaux de parement à des parois en béton (figure 1).

FIG.1

EP 0 034 545 A2

Croydon Printing Company Ltd.

La présente invention est relative aux problèmes posés par la fixation de panneaux de parement, en matériau tendre, tels que panneaux d'isolation phonique et/ou thermique ou de décoration, à des parois en béton, et plus particulièrement lors de la réalisation de ces parois pendant le coulage du béton.

Jusqu'alors, on utilise pour réaliser cette fixation des dispositifs comportant un élément en forme de queue de cochon destinée à être vissée dans le matériau tendre du panneau prolongé par un élément en forme de tige ou d'anneau simple destiné à être noyé dans le béton lors de son coulage.

Ces dispositifs connus sont utilisés au cours du processus suivant : on réalise un coffrage, on garnit ce coffrage de panneaux de parement, on visse dans ces panneaux les queues de cochon des dispositifs de fixation, puis on procède au coulage de la paroi de béton.

Mais, lorsqu'il s'agit de la réalisation de plafond, il peut se faire qu'il y ait une interruption de temps entre le vissage des queues de cochon et le coulage du béton et que par suite de la circulation sur le chantier de la main d'oeuvre, les tiges ou anneaux destinés au noyage ultérieur dans le béton soient déteriorés ou pliés et ne jouent plus leur rôle.

En outre, les tiges ou anneaux simples ne garantissent pas avec une fiabilité totale l'ancrage des dispositifs de fixation des panneaux dans les parois de béton.

La présente invention a pour but de remédier à ces inconvénients et, en particulier, de proposer des dispositifs de fixation du genre précité mais réalisés d'une manière telle qu'ils ne soient pas déteriorables lorsque l'on marche accidentellement sur leurs têtes, qu'ils soient ancrés de manière certaine et positive dans le béton après coulage de celui-ci et qu'ils soient fabriquables industriellement à coût optimal.

A ces effets, un dispositif de fixation de panneau de parement lors de la réalisation par coulage de parois de béton du genre comportant un élément spiralé vissable dans le matériau tendre d'un panneau de parement et un élément d'ancrage dans le béton coulé se caractérise en ce qu'il

3

est constitué d'un ressort hélicoïdal de diamètre constant comportant successivement trois parties :

a) une partie de vissage dans le matériau tendre à pas large et constant permettant le vissage aisé dans le matériau tendre en évitant sa détérioration, l'extrémité d'attaque de cette partie étant biseautée,

b) une partie médiane à spires jointives permettant l'arrêt du vissage, et

c) une .partie de noyage dans le béton coulé à pas intermédiaire terminée par une spire plate à extrémité biseautée.

Ce produit défini très précisément est fabriquable industriellement en très grande série à coût optimal sur les machines classiques à fabriquer des ressorts.

Ce ressort est préférablement réalisé en métal pour des raisons de résistance au feu. Ce métal est soit inoxydable, soit traité.

L'invention porte également sur un outil à main pour la mise en oeuvre du dispositif de fixation de l'invention.

Cet outil à main se caractérise en ce qu'il est constitué d'une poignée solidaire d'un corps cylindrique creux à l'intérieur duquel est monté sur un rayon une plaque plane de butée d'une hauteur au moins égale à l'épaisseur du fil dont est constitué le ressort du dispositif de fixation selon l'invention.

On décrira ci-après un mode de réalisation des objets de l'invention en se référant au dessin annexé sur lequel :

- la figure 1 est une vue en coupe d'un dispositif selon l'invention après mise en oeuvre et

- la figure 2 est une vue d'un appareil à main utilisable pour la mise en oeuvre de ce dispositif.

Le dispositif de fixation de l'invention, représenté sur la figure 1, est constitué d'un ressort hélicoïdal 1 de diamètre constant.

La partie 2 de ce ressort, destinée à être vissée dans le matériau tendre d'un panneau de parement 3, est à pas large et constant permettant le vissage aisé dans ce matériau sans détérioration de celui-ci.

L'extrémité 4 de cette partie est biseautée pour

4

faciliter la pénétration du ressort dans le panneau lors du début de l'opération de vissage.

Le ressort comprend ensuite une partie médiane 5 à spires jointives permettant l'arrêt du vissage dans le matériau tendre sans impliquer une attention particulière d'un opérateur moyennement qualifié.

L'autre partie extrême du ressort 6 est à un pas inférieur à celui de l'extrémité de vissage, et sert à assurer en toute fiabilité le noyage du ressort dans le béton de la paroi lors de son coulage.

Incidemment, on mentionne que le diamètre constant du ressort de fixation est choisi supérieur au calibre maximum des graviers éventuellement inclus dans le béton coulé.

La figure 2 représente un outil à main pour la mise en oeuvre du ressort de fixation selon l'invention.

Cet outil à main comporte une poignée 7 solidaire d'un corps cylindrique creux 8 à l'intérieur duquel est monté, sur un rayon, une plaque plane de butée 9.

Cet outil s'utilise très simplement de la manière suivante : l'opérateur engage d'abord manuellement l'extrêmité biseautée du ressort dans le matériau tendre du panneau de parement. Ensuite, il coiffe le ressort du corps cylindrique creux de l'outil à main et fait tourner celui-ci à l'aide de la poignée 7, la plaque 9 vient alors en butée contre l'extrémité biseautée de la tête 6 du ressort et l'on poursuit ensuite l'opération de vissage jusqu'à ce que la partie médiane à spires jointives 5 vienne en butée contre la surface du panneau.

REVENDICATIONS

1° Dispositif de fixation de panneau de parement lors de la réalisation par coulage de parois de béton du genre comportant un élément spiralé vissable dans le matériau tendre d'un panneau de parement et un élément d'ancrage spiralé dans le béton coulé, constitué d'un ressort hélicoïdal de diamètre constant, caractérisé en ce qu'il comporte successivement trois parties :

a) une partie de vissage dans le matériau tendre à pas large et constant permettant le vissage aisé dans le matériau tendre en évitant sa détérioration, l'extrémité d'attaque de cette partie étant biseautée comme connu en soi.

b) une partie médiane à spires jointives permettant l'arrêt du vissage, et

c) une partie de noyage dans le béton coulé à pas intermédiaire terminée par une spire plate à extrémité biseautée.

2° Outil rotatif à main pour la mise en oeuvre de ce dispositif caractérisé en ce qu'il est constitué d'une poignée solidaire d'un corps cylindrique creux à l'intérieur duquel est monté sur un rayon une plaque plane de butée d'une hauteur au moins égale à l'épaisseur du fil dont est constitué le ressort du dispositif de fixation selon l'invention.

FIG.1

FIG.2